Europäisches Patentamt

European Patent Office

Office européen des brevets

(19)

(11) Veröffentlichungsnummer: **0 298 995**
**B1**

(12) **EUROPÄISCHE PATENTSCHRIFT**

(45) Veröffentlichungstag der Patentschrift: 26.09.90

(21) Anmeldenummer: 87905197.7

(22) Anmeldetag: 11.03.87

(86) Internationale Anmeldenummer:
PCT/EP87/00143

(87) Internationale Veröffentlichungsnummer:
WO 87/05979 08.10.87 Gazette 87/22

(51) Int. Cl.⁵: **F 16 J 15/32, F 16 J 15/54**

(54) Dichtungring zur Anordnung zwischen zueinander axial-und drehbeweglichen Maschinenteilen.

(30) Priorität: 24.03.86 PCt/ep86/00178
19.06.86 PCt/ep86/00363

(43) Veröffentlichungstag der Anmeldung:
18.01.89 Patentblatt 89/03

(45) Bekanntmachung des Hinweises auf die
Patenterteilung:
26.09.90 Patentblatt 90/39

(84) Benannte Vertragsstaaten:
DE FR IT

(56) Entgegenhaltungen:
EP-A-0 120 987
DE-A-2 530 097
FR-A-2 255 816

(73) Patentinhaber: ZAHNRADFABRIK
FRIEDRICHSHAFEN AKTIENGESELLSCHAFT
Löwentaler Strasse 100 Postfach 2520
D-7990 Friedrichshafen 1 (DE)

(72) Erfinder: PICK, Claus-Uwe
Weidenring 27
D-7990 Friedrichshafen 1 (DE)

(74) Vertreter: Raue, Reimund
Zahnradfabrik Friedrichshafen AG Löwentaler
Strasse 100 Postfach 2520
D-7990 Friedrichshafen 1 (DE)

Courier Press, Leamington Spa, England.

**Beschreibung**

Die Erfindung betrifft einen Dichtring zur Anordnung zwischen zueinander axial- und drehbeweglichen Maschinenteilen, die außerdem exzentrisch verlagert sein können, nach dem Oberbegriff des Anspruches 1. Sie richtet sich insbesondere auf Einsatzfälle, bei denen die Maschinenteile sowohl Radial- als auch größere Axial- und Schwenkbewegungen zueinander unter starker äußerer Schmutzeinwirkung (durch Staub, Schlamm, Nässe etc.) ausführen müssen und dennoch eine Öldichtheit auf der Innenseite erreicht werden soll. Dies ist beispielsweise der Fall bei den zwischen den Gabelköpfen und den Achsgehäusen benötigten Dichtungen der Differentialwellen bei angetriebenen Lenkachsen für Ackerschlepper, Baufahrzeuge usw., bei welchen infolge der Schwenkgeometrie der Lenkzapfenlagerung je nach Richtung und Größe des Lenkeinschlages die Differentialwelle mehr oder weniger weit axial verschoben und dabei auch stärker seitlich ausgelenkt wird, als es bei normalen Wellendichtungs-Einsatzfällen üblich ist. Da bei solchen Verwendungsfällen, wo meist erst im Radkopfgetriebe eine letzte Drehzahlreduktion stattfindet, die Drehzahlen der Differentialwellen auch bei Land- und Baumaschinen noch relativ hoch sein können, kommt es hier besonders leicht zu beschleunigtem Eindringen von Festoffen in den Dichtspalt. Die Folge ist dann, aufgrund der damit verbundenen Einlagerung der Feststoffe in die meistens auf Kautschukbasis weichelastisch ausgeführten Dichtringe, ein verfrühter Zusammenbruch des die Radialkraft der Lippe der Wellendichtung tragenden Ölfilmes. Die Gebrauchsdauer der Dichtungen infolge der dann einsetzenden verschleißfördernden, trockenen Misch- und Festkörperreibung wird dadurch rapide verkürzt, und die Folgekosten durch Maschinenausfälle und vermehrte Reparaturarbeiten sind erheblich.

Nach der EP—A—120987 ist ein zwar für rotierende und radial auslenkende Bewegungen vorgesehener Dichtring aus nachgiebigem Werkstoff bekannt. Bei ihm ist neben einer radial gerichteten, ölseitigen Dichtlippe ein Führungsring zur Mitführung der Dichtlippe gemäß den Exzentrizitäten in Radialrichtung vorgesehen. Damit soll eine Verformung bzw. ein Abheben der Lippe von der Welle bei den Radialauslenkungen vermieden werden. Der die Dichtlippe tragende Lippenring und der mit ihm einstückige Führungsring sind jedoch nicht für eine Schmutzabweisung unter Extrembedingungen von der ölabgewandten Außenseite her geeignet. Weder seine Werkstoffbeschaffenheit noch seine Bauart können bei sowohl hin- und hergehenden als auch radial auslenkenden Maschinenteilen verhindern, daß von der Umgebung her Schmutz in den Dichtungsbereich eindringt, die Dichtung zerstört und Leckagen verursacht. Dazu bedarf es neben einem steifen Werkstoff einer zweckmäßigeren Ausgestaltung, insbesondere der umgebungsseitigen Stirnflächer der Dichtung als axialsteife und axialgerichtete Abstreiflippe, um Feststoffanlagerungen von der Dichtfläche abzuschaben und ein Einlaufen auf der Welle auszuschließen. Für eingangs erwähnte Anwendungsfälle ist der hier in Betracht gezogene Dichtring aus weichelastischem und damit aus einem rascher Alterung infolge werkstoffbedingt erleichterter Feststoffanlagerung unterworfenem Material mit geringer Eigensteifigkeit ungeeignet. Ihm fehlt sowohl eine Verwendbarkeit zum Abstreifen des Schmutzes bei oszillierenden Bewegungen und die Schmutzaufnahmefähigkeit seinesporösen Dichtwerkstoffesbegrenzt nicht die Gefahr von Feststoffeinlagerungen. Zusätzlich führen auch exzentrische Auslenkungen unter einseitigen Druckbelastungen zu beschleunigter Unterwanderung bzw. zu örtlichen Überbelastungen der Dichtwerkstoffe. Bei dieser bekannten Dichtung ist keine Gegenmaßnahme gegen Verkrustungen im Dichtspalt vorgesehen. Es müßte daher nach wie vor sowohl ein erhöhter Abrieb und ein größeres Beschädigungsrisiko bei schlechter Abstreifwirkung in Kauf genommen werden, weil Schmutz hier unter der am Versteifungsring elastisch angelenkten Lippe weiterhin noch leicht bis zum Öldichtspalt durchdringen kann. Da auch genügend kräftige Axialabstützungsquerschnitte im Rumpfteil und geeignete Gehäuseanlageflächen bzw. Einkelmmöglichkeiten fehlen, um extreme Abstreiferaufgaben zuverlässig mitzuerfüllen, kann die vorgesehene radiale Verlagerung des Lippenringes gegenüber dem Versteifungsring auch nicht mit einer den Betriebsbedingungen entsprechenden Schmutzabhaltewirkung erfolgen. Selbst wenn außen eine an sich dort gar nicht in Betracht gezogene, zusätzliche Schmutzabweiselippe angeformt würde, ergäbe sich noch keine ausreichende Biegezähigkeit des Versteifungsrings, um die Verwendung des Dichtringes auch als Abstreifelement zu ermöglichen und dabei die zuverlässig gleichmäßig dichte Anlage der Lippe mit axialer Hauptrichtung gegen die Welle zu gewährleisten.

Eine Wellendichtung nach der DE—C—23 30 468 besteht aus einer sowohl werkstoffmäßig als auch von der axial unversteiften, weil achssenkrechten Lippe her betrachtet für Abstreifzwecke ungeeigneten Gummidichtung. Diese Gummidichtung soll lediglich durch einen Abdeckring aus Schaumstoff auf der Schmutzseite gegen unterwandernden Sand etc. geschützt werden. Eine Möglichkeit, solche Ablagerungen auf der Dichtfläche bei hin- und hergehenden Bewegungen abzuschaben, ist nicht gegeben und exzentrische Radialauslenkungen nicht berücksichtigt.

Weiterhin ist nach der DE—A—25 30 097 für nur hin- und hergehende Kolbenstangen eine Dichtung bekannt, die den Austritt von Öl verhindert. Dazu weist sie an einem radial auslenkbaren Tragteil eine ölseitig angeordnete Dichtlippe mit Tropfrand auf, welche das Öl von der Kolbenstange abstreifen. Das Eindringen von Schmutz kann diese Dichtung nicht verhindern.

Eine aus zwei Dichtringen mit dazwischenliegender Druckkammer bestehende Dichtung für hin- und hergehende Stangen ist aus der EP—A—104504 bekannt. Der zur Umgebung hin angeordnete Dichtring ist aus sehr hartem Werkstoff, und er hat zwei Abstreiflippen. Davon bildet die äußere mit ihrer Stirnfläche eine mit keilförmigem Querschnitt nach außen weisende Dichtkante. Die zweite Abstreiflippe liegt mit einer im Querschnitt ebenfalls keilförmigen, jedoch radial gerichteten Dichtkante nach Art einer Wellendichtung an der Stange an.

Diese Dichtung ist für sich mit exzentrischen Verlagerungen drehende Wellen nicht geeignet, da sich die scharfen Dichtkanten nach kurzer Zeit in die Welle eingraben und damit die Dichtflächen zerstören würden. Ferner können die Abstreiflippen aus hartem Werkstoff einer exzentrischen Verlagerung einer Welle nur ungenügend folgen, so daß in dem einen Umfangsbereich ein vermehrter Druck die Zerstörung der Dichtfläche beschleunigt, während durch die Entlastung in dem gegenüberliegenden Umfangsbereich eine Spaltbildung begünstigt wird, durch die Schmutz in den Dichtungsbereich gelangen kann, der eine schnelle Zerstörung der gesamten Dichtung verursacht.

Die Aufgabe der Erfindung wird, ausgehend von der, EP—A—120987, darin gesehen, einen langlebigen, kurzbauenden, einfachen Dichtring für eine kurzbauende Dichtungsanordnung für mit Exzentrizitäten rotierende und axial oszillierende Wellen zu schaffen, welcher sowohl zur Abschälung von Schmutzanlagerungen geeignet und aus gegen Feststoffreibung möglichst unempfindlichen Dichtwerkstoffen herstellbar ist, ohne daß die Dichtflächen zerstört werden. Dabei soll der Dichtring dennoch die zur eigentlichen Dichtspaltabdeckung ausreichende Flexibilität für überlagerte exzentrische und axial oszillierende Relativbewegungen aufweisen, so daß er auch höhere Drehzahlen unter starken Schmutzeinwirkungen von außen her lange Zeit ohne Schmutzeintragung bzw. Verschleiß ertragen kann.

Die Lösung wird mit den kennzeichnenden Merkmalen des Anspruches 1 insbesondere dadurch erreicht, daß am radial abgefederten, axialsteifen Führungsring eine speziell als Abstreifer gestaltete Dichtlippe aus verschleißarmem, zähem Werkstoff vorgesehen ist. Durch den Führungsring wird die angeformte Kreiszylinder-Abstreiflippe gezwungen, die Radialauslenkungen des drehenden Maschinenteiles (Welle bzw. Rad) fortlaufend mitzumachen, weil Führungsring und Lippe um einen wesentlichen Teil der Exzentrizitätshübe in gleicher Richtung bei gleicher Frequenz mitbewegt werden. Da hierbei der Freiwinkel zwischen Dichtungsgegenfläche und Lippe dank der rotationssynchronen Radialauslenkungen auch bei maximaler Exzentrizität nahezu unverändert bleiben kann, ist ein Werkstoff mit geringer innerer Dämpfung, der auch eine geringere Feststoffaufnahmeneigung und eine geringere Verschleißbereitschaft aufweist, verwendbar. Eventuell von der Abstreiflippe selbst noch zu vollziehende Anpaßbewegungen können hierbei auch bei mehrfach so großen Exzentrizitäten, sie sie mit üblichen Gummiwellendichtungen gerade noch zugelassen werden, dank der konstruktionsbedingten Reduzierung des nötigen Verformungsgrades unter Verwendung eines homogeneren Dichtungswerkstoffes mit verminderter Schmutzaufnahmefähigkeit, besserer Abstreifwirkung und höherer Verschleißfestigkeit nun mit ausreichend langen Gebrauchsdauern überstanden werden. Ein für diese Bauweise beispielsweise in Frage kommender Werkstoff ist Polyurethan, das als Dichtung bisher hauptsächlich zur Schmutzabdeckung von Kugellagern oder als Abstreifer an Kolbenstangen verwendet wurde, wo also keine großen Exzentrizitäten auftreten. Bei der radial abgefederten Anordnung bzw. Gestaltung des Führungsringes und bei dessen engem Lagerspiel gegenüber dem drehenden Maschinenteil übernimmt nun dessen relativ starrer Rumpfteil auch die fortlaufend neue Mittenzentrierung der Abstreiflippe bei entsprechend geringerer Verformung und ohne umlaufende Spaltöffnung infolge Ovalwerdens. Gleichzeitig ist der Führungsring gegen überlagerte kolbenartige Axialbewegungen infolge seiner axialen Steifigkeit des drehenden Maschinenteiles ein gut zentrierendes Gegenlager für die Abstreiferkräfte. In Dauerstandversuchen wurde eine Eignung dieser Konstruktion mit Elastomeren nachgewiesen, deren Zugfestigkeit über 30 N/mm² beträgt.

Die für die radiale Abfederung des steifen Führungsringes erforderliche Elastizität wird erfindungsgemäß also nicht primär mit den Eigenschaften des die Abstreiflippe tragenden Führungsring-Werkstoffes erreicht, sondern überwiegend durch eine spezielle Formgebung bzw. Axial- und Radialabstützung im Gehäuse, wobei der Führungsring gewissermaßen als Stellglied für die Radialbewegungen der Schutzlippe mitbenutzt wird.

Dieser Dichtring erfüllt erforderlichenfalls eine Doppelfunktion als Abstreifer und Wellendichtung für drehende, schiebende und und schwenkende Relativbewegungen mit Vorkehrungen für erhebliche Radialauslenkungen selbst bei den vorliegenden hohen Gebrauchsdauer- und Dichtungsanforderungen bei kurzer Baulänge und einfachem Gesamtaufbau. Eine besonders schubsteife Gestaltung der Abstreiflippe verhindert deren Unterwanderung durch auf der Welle anhaftenden Schmutz auch bei den hin- und hergehenden Bewegungen.

Durch eine entweder mittels besonderer Lippengestaltung, Einlageteilen oder Werkstoffanwendungen erreichte Axialversteifung der Abstreiflippe werden die Schabeleistungen der Dichtkante des Abdeckringes günstig beeinflußt.

Weitere Vorteile und Ausgestaltungsmöglichkeiten der Erfindung sind in den Unteransprüchen angegeben.

Mit einem Axialluftspalt vor der dem drehenden Maschinenteil benachbarten und gegebenenfalls einer Wellendichtung zugewandten Stirnfläche des Dichtringes gegenüber einer Axialabstützfläche lassen sich bei Axialschub entgegen dem Dichtring auftretende Beulverformungen günstig auffangen, ohne daß die Lippe vom Dichtspalt abgehoben wird. Der Führungsring führt die Lippe konzentrisch, weil sein zylindrischer Mantelbereich als radial federndes Gleitlager arbeitet.

Als vorteilhafte Werkstoffe mit gegenüber Kautschukarten günstigen Abstreifeigenschaften können insbesondere Polyurethan, Polyester oder Polytetrafluorethylen in Frage kommen. Eine günstige Beeinflussungsmöglichkeit der werkstoffgemäßen Anpassungsträgheit der Abstreiflippe kann darin bestehen, die Breite des zylindrischen Fußbereiches des Führungsringes so zu wählen, daß auch bei erhöhten Exzentrizitäten die Reibung dieses als Gleitlager wirkenden Teiles noch gering bleibt und damit auch sein Verschleiß. Dabei wird auch die Dichtkante der Abstreiflippe nicht unzulässig stark gegen die Dichtfläche gepreßt und verschleißt nicht viel schneller als bei konzentrischer Rotation.

Eine bauliche Zusammenlegung des Dichtringes mit einer nachgeordneten, konventionellen Wellendichtung in einem gemeinsamen Gehäusemantel kann montagetechnisch Vorteile mit sich bringen. Dabei bietet sich auch die Möglichkeit, eine Axialabstützfläche in Form einer Zwischenwand dieses Gehäusemantels vorzusehen.

Höhenversetzte Axialeinkerbungen auf gegenüberliegenden Stirnflächen im Rumpfteil zur Formgebung bei dem Z- bzw. S-förmigen Verbindungssteg stellen eine besonders einfache Beeinflussungsmaßnahme zur Erzielung der geforderten Radialelastizität bei axialsteifem Dichtring bzw. zähem Werkstoff dar.

Bei entsprechender axialsteifer Konstruktion einer ölseitig nachgeordneten Wellendichtung kann auch eine unmittelbare Einstückigkeit derselben mit dem Dichtring, z. B. durch Verkleben, vorteilhaft sein. Weiterhin wäre auch denkbar, lediglich dem Führungsring ölseitig eine weichelastische Öllippe anzufügen und diese z. B. durch Einlegen in eine Ringnut am Führungsring zu zentrieren.

Eine andere Art der Schaffung eines günstigen radialen Elastizitätsverhaltens für den Dichtring, ohne daß es zusätzlicher Materialien, z. B. für einen Mantel, bedürfte, kann darin bestehen, daß an beiden Umfängen des Dichtringes sinngemäß gleichartige Radialeinkerbungen und jeweils zwei unter Radialvorspannung auseinanderspreizende Mantelbereiche vorgesehen sind, wobei der dem stehenden Maschinenteil zugewandte Stützring an diesem stehenden Maschinenteil beispielsweise durch eine Einspannung drehfest gehalten ist. Falls der für den Führungsring gewählte Werkstoff nicht selbst ausreichende Gleitlagereigenschaften aufweist, kann zumindestens in seinem zylindrischen Fußbereich noch eine Einlage aus speziellem Gleitlagerwerkstoff, wie z. B. Polytetrafluorethylen, vorgesehen werden.

Auch die Verwendung sogenannter Ölrückfördernuten, wie sie an sich bekannt sind, kann in diesem zylindrischen Fußbereich ohne weiteres vorgesehen werden.

Die Vorteile der Erfindung lassen sich im Prinzip sowohl mit am Außenumfang als auch am Innenumfang drehfest gehaltenem Dichtring erreichen. Bei letztgenannter Variante kann die Fliehkraft helfen, Staub vom Dichtspalt wegzuschleudern. Indem der Dichtring zumindestens stirnseitig durch ein Blechverkleidung abgedeckt ist, wird einerseits die Schmutzeinlagerung weiter behindert und andererseits die axiale Steifigkeit weiter verbessert, ohne daß dabei die radiale Durchfederungsmöglichkeit beeinträchtigt werden muß. Hierbei kann zur Axialabstützung eine Zwischenwand des Gehäusemantels zwischen Dichtring und Wellendichtung vorgesehen sein.

Mit einer radial zurückfedernden Blechabdeckung der außen liegenden axialen Einkerbung über der Abstreiflippe kann auch erreicht werden, daß vor der Dichtkante anlagernder Schmutz durch ein solches federndes "Schälmesser" unter Schonung der Dichtkante der Abstreiflippe immer wieder abgeschabt wird, ehe die Dichtkante der Lippe gegen Schmutzanlagerungen anläuft.

Die Erfindung ist speziell für den Einsatz bei den Gelenk- und Differentialwellen angetriebener Lenkachsen von Baufahrzeugen und Ackerschleppern geeignet, da hier auch mechanische Beschädigungsgefahren der Abstreiflippe durch Steine usw. bestehen, welche gemäß der Erfindung durch einen radial auslenkbaren und mit einem konventionellen Wellendichtring kombinierbaren Dichtring aus hochfestem Elastomer deutlich verringert sind.

Weitere Vorteile der Erfindung sind aus den anhand von Beispielen näher erläuterten Zeichnungen ersichtlich.

Fig. 1 zeigt den Dichtring in einem gemeinsamen Gehäusemantel mit einem handelsüblichen Radialwellendichtring zusammengebaut, den es vor Schmutzeintragung durch eine radial und axial schwingende Welle zu schützen hat.

Fig. 2 zeigt Abmessungsverhältnisse eines im Versuch bewährten Dichtringes nach der Erfindung mit auf den Wellendurchmesser bezogenen Verhältnismaßen sowie gestrichelt die Alternative einer angefügten Öllippe aus weichelastischerem Material.

Fig. 3 zeigt den Dichtring mit einer Befestigung am drehenden Maschinenteil auf seinem Innenumfang, so daß er durch Fliehkraft in seinen Dichtspalt gepreßt ist und vor der Abstreiflippe anstauender Schmutz nach außen leicht abgeschleudert wird.

Fig. 4 zeigt einen Dichtring mit einem Gleitlagerwerkstoff im zylindrischen Fußbereich des Führungsringes und mit einer als "Schälmesser" wirkenden Federringzusatzabdeckung vor der Abstreiflippe.

Fig. 5 ist ein Anordnungsbeispiel für erfindungsgemäße Dichtungen an einer angetriebenen Lenkachse für geländegängige Fahrzeuge zwischen Lenkzapfenlager und Differential- bzw. Radgetriebe.

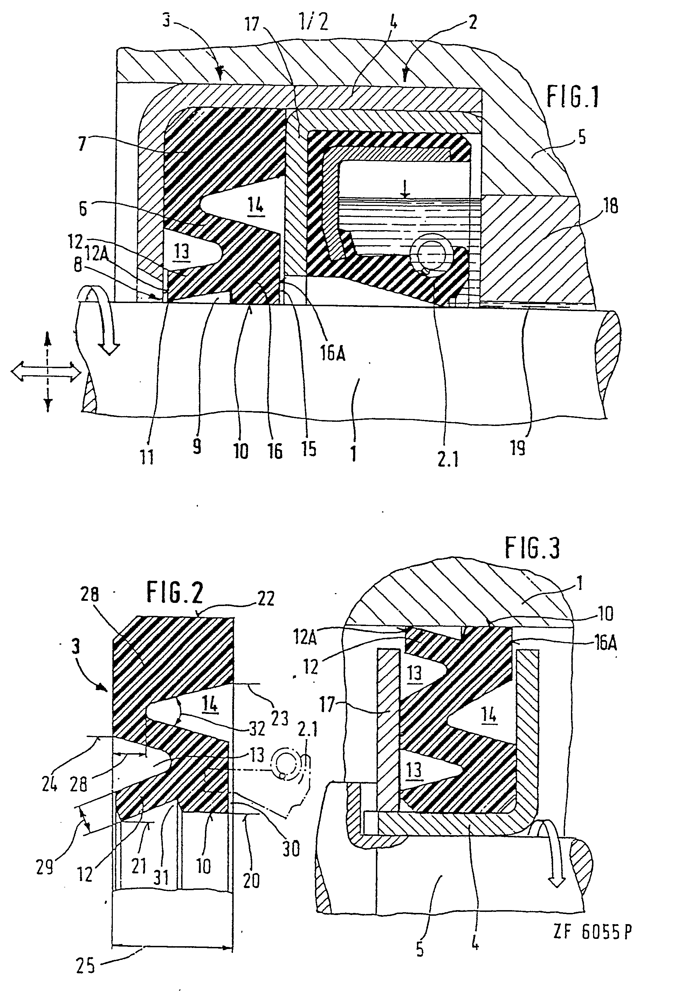

In Fig. 1 ist auf dem drehenden Maschinenteil 1, z. B. einer Welle, welche sowohl rotiert als auch beträchtliche radiale und axiale Auslenkungen erfährt, sowohl eine übliche Wellendichtung 2 zur Öldichtung als auch ein als Dichtring 3 gestalteter Abstreifer als Staubschutz vorgesehen. Sie sind hier in einem gemeinsamen Gehäusemantel 4 zusammengefaßt und in einem stehenden Maschinenteil 5, z. B. einem Achsrohr koaxial nacheinander angeordnet und darin drehfest gehalten, beispielsweise mit Unterstützungen eines Dichtklebers. Gegen aus dem drehenden Maschinenteil 1 herrührende Schubkräfte ist sowohl der gemeinsame Gehäusemantel 4 als auch die Wellendichtung 2 axial durch eine Ringschulter des stehenden Maschinenteiles 5 abgestützt. Während die Wellendichtung 2 aus relativ flexiblem, gummiähnlichem Dichtungswerkstoff besteht und zumindestens im Neuzustand gegen das auf der dem Dichtring 3 entgegengesetzten Seite vor ihrer Dichtlippe 6 anstehende Schmiermittelöl selbst bei erheblich exzentrischem Rundlauf des drehenden Maschinenteiles 1 infolge ausreichender Schmierung eine befriedigende Abdichtung ergibt, muß auf der gegenüberliegenden Seite der Dichtring 3 hauptsächlich Abstreiffunktionen bei überwiegend trockener Reibung gegen das Hereinschieben von Schmutz während Axialbewegungen des drehenden Maschinenteiles in die Nähe der Wellendichtungen 2 auf kürzestmöglicher Baulänge mitübernehmen. Der Dichtring 3 besteht im wesentlichen aus einem als Führungsring 16 anzusehenden Innenkörper mit zylindrischem Mantelbereich 10, der mit der schmutzseitig durch je eine radiale und eine axiale Ringnut 9 bzw. 13 davon abgesetzt angeformten Abstreiflippe 12 axialsteif und über einen mit Axialeinkerbungen 13, 14 versehenen Zwischensteg 6 mit einem ebenfalls axialsteifen, ihn außen umfassenden Stützring 7 radial flexibel so verbunden ist, daß sich ein etwa Z- oder S-förmiger Querschnitt ergibt. Im Dichtspalt 8 zwischen dem drehenden Maschinenteil 1 und dem Dichtring 3 sind zwei durch eine keilförmige Radialeinkerbung 9 getrennte Mantelbereiche vorgesehen. Einem zylindrischen Führungsring 16 ist eine Abstreiflippe 12 mit unter flachem Winkel 31 zur Drehachse geneigter, stumpfkeilförmiger Dichtkante 11 vorgeordnet, welche vorne mit zur Drehachse senkrechter Vorderfront ausläuft und sich im Einbauzustand unter radialer Vorspannung an das drehende Maschinenteil 1 auch bei erheblicher Exzentrizität der Drehachse zur Lagerachse so anpreßt, daß ihr Freiwinkel 31 dabei erhalten bleibt. Die Hauptbelastung hat hierbei während exzentrischer Rotation die zylindrische Fußbereich 10 des als Führungsring 16 dienenden Innenteiles des Dichtringes 3 auf der der Wellendichtung 2 zugewandten Seite zu tragen. Hier wird eine enge Laufpassung vorgesehen, so daß entsprechend den Exzentrizitäten des drehenden Maschinenteiles 1 mit diesem zylindrischen Mantelbereich 10 auch der Führungsring 16 und die Abstreiflippe 12 radial auf- und abschwingen. Letztere bildet den ihm auf der der Wellendichtung 2 abgewandten Schmutzseite unmittelbar angeformten zweiten Mantelbereich und bewegt sich infolge der Mitnahme durch den Führungsring 7 nahezu höhen- und frequenzgleich zum drehenden Maschinenteil 1 bzw. 5 mit.

Durch eine keilförmige Ausgestaltung der Abstreiflippen-Vorderkante liegt dieser zweite als Dichtkante 11 gestaltete Mantelbereich im Vergleich zum zylindrischen Mantelbereich 10 mit erheblich schmälerer Fläche an, wird aber unter weitestgehender Vermeidung exzentrischer Belastungen mit nahezu konstanter Vorspannung gegen das drehende Maschinenteil 1, auch während der Hub- oder Schwenkbewegungen, dicht angepreßt. Da für die trockene Reibung und die Schmutzablagerung keine Werkstoffe mit hoher innerer Dämpfung, wie beispielsweise Gummi, in Frage kommen, sondern zähe bzw. ausgesteifte Ringe benötigt werden, wird die zur Erzielung der Radialvorspannung erforderliche innere Elastizität des Dichtringes 3 erfindungsgemäß primär durch eine besondere Formgestaltung erreicht. Im vorliegenden Beispiel sind dazu auf jeder seiner beiden Stirnseiten je eine sich V-förmig öffnende Axialeinkerbung 13, 14 mit einer über die halbe Breite des Dichtringes 3 hinausgehende Tiefe und einer zur gegenüberliegenden Axialeinkerbung 13 bzw. 14, um etwa deren radiale Höhe höhenversetzten Anordnung vorgesehen. Damit erlangt der Zwischensteg 6 etwa S- oder Z-Querschnitt. Der Nutengrund der Axialeinkerbungen 13, 14 ist gut ausgerundet und ein relativ großer Öffnungswinkel vorgesehen, um das Festbacken von Schmutz zu erschweren. Dabei ist zwischen der Wellendichtung 2 und der ihr zugewandten Stirnseite des Dichtringes 3 ein bis in die obere Axialeinkerbung 14 reichender Axialluftspalt 15 vorhanden, in welchen sich der radial schwingende Führungsring 16 des Dichtringes 3 bei den Durchfederungsvorgängen axial ausbeulen und bei Axialschub gegen die Abstreiflippe 12 gegen die als radiale Zwischenwand des Gehäusemantels 4 dienende Rückwand der Wellendichtung 2 nach kurzem Axialweg als Axialabstützung 17 anlehnen kann. Die Abstreiflippe 12 ist dabei zwar stets in Richtung des drehenden Maschinenteiles 1 angefedert, bei entsprechend der Erfindung vorzugsweise einzusetzenden, sehr verschleißfesten Elastomeren mit geringerer innerer Dämpfung bzw. schlechtem eigenen Federverhalten würde die Lippe 12 allein ohne Führungsring 16 einer größeren Exzentrizität des drehenden Maschinenteiles jedoch nicht so schnell folgen können, daß stets ein minimaler Dichtspalt 8 vorliegt. Da erfindungsgemäß aber der Führungsring 16 eine Zwangsführung der Lippe 12 synchron zu den radialen Auslenkungen des drehenden Maschinenteiles 1 übernimmt, kann die Lippe 12 trotz der zäheren Werkstoffeigenschaften der in Betracht gezogenen verschleißfesteren Qualitäten ihre Dichtungsaufgabe dennoch zur Zufriedenheit während sehr viel längerer Gebrauchsdauer erfüllen. Von Vorteil ist dabei auch die niedrigere Feststoffaufnahmefähigkeit der zäheren Werkstoffe 1 welche durch eine weitgehende axiale Blechabdeckung 4, 34 auf der Verschmutzungsseite, welche bis über die äußere Axialeinkerbung 13 heruntergezogen sein kann, noch gefördert wird.

Die radialen Auslenkungen des Führungsringes 16 welche durch oft langhubige Relativbewegungen in axialer Richtung überlagert sein können, können beträchtlicher sein als das Lagerspiel des drehenden Maschinenteiles 1 gegenüber einem der Wellendichtung 2 nachgeordneten Lager 18, da bei größeren Seitenkräften eine Verkantung des drehenden Maschinenteiles 1 in der Führung des Lagers 18 erfolgen können muß, wie dies z. B. bei von Kreuzgelenken geführten Differentialwellen bei angetriebenen Lenkachsen der Fall ist. Dabei kann der Luftspalt 19 des Lagers 18 erheblich größer sein, als das am zylindrischen Mantelbereich 10 des Führungsringes 16 vorhandene Lagerspiel.

In Fig. 2 ist ein Ausführungsbeispiel des Dichtringes 3 seinen hauptsächlich vom Durchmesser des drehenden Maschinenteiles 1 bestimmten Hauptabmessungen angegeben, welche etwa im Bereich von ca. 30 bis 100 mm Durchmesser sich gut bewährt haben:

Lichtdurchmesser des zylindrischen Mantelbereiches 10 =
Maß 20: 1,0 × Wellendurchmesser
Lichtdurchmesser der Dichtkante 11 =
Maß 21: ca. 0,98 × Maß 20
Außendurchmesser des Stützringes 7 =
Maß 22: ca. 1,39 × Maß 20
Außendurchmesser der Axialeinkerbung 14 (vor der Wellendichtung 2) =
Maß 23: 1,26 × Maß 20
Außendurchmesser der Axialeinkerbung 13 (auf Schmutzseite) =
Maß 24: 1,15 × Maß 20
Gesamtbreite des Dichtringes 3 =
Maß 25: ca. 0,12 × Maß 20
Breite des zylindrischen Mantelbereiches 10 =
Maß 26: ca. 0,05 × Maß 20
Tiefe der Axialeinkerbungen 13/14 =
Maß 27: ca. 0,062 × 20/0,08 × Maß 20
Dicke des Zwischensteges 6 =
Maß 28: 0,032 × Maß 20
Dicke der Abstreiflippe 12 =
Maß 29: ca. 0,028 × Maß 20
Axialluftspaltrücksprung 15 (des Führungsringes 16) =
Maß 30: ca. 0,02 × Maß 20
Schrägungswinkel der Abstreiflippe 12 =
Maß 31: ca. 20°
Öffnungswinkel der Axialeinkerbungen 13, 14 =
Maß 32: ca. 20° bis 30°

Auf der ölzugewandten Seite ist noch als gestrichelte Alternative eine Öllippe 2.l aus elastischerem Werkstoff angegeben, deren keilförmig zugespitzte Dichtkante senkrecht gegen das drehende Maschinenteil 1, 5 drückt, während ihre Radialbefestigung, z. B. durch Einkleben in eine axiale Ringnut des Dichtringes 3, erfolgen kann.

In Fig. 3 ist der Dichtring 3 für ein Beispiel dargestellt, bei dem er vom drehenden Maschinenteil 1 gehalten und von innen gegen einen größeren Durchmesser durch die Fliehkraft angepreßt wird, wobei zwar der Dichtspalt 8 etwas größer, aber Selbstreinigungseffekte nutzbar gemacht werden. Für solche Fälle gelten die bevorzugten Abmessungsverhältnisse der Dickenquerschnitte etwa im umgekehrten Sinne. Dabei kann zur Kompensation der erhöhten Radialsteifigkeit des Mantelbereiches 10 infolge des größeren Umfanges eine größere Zahl von gleichmäßig zueinander versetzt vorgesehenen Axialeinkerbungen 13, 14 gewählt werden. So ist im vorliegenden Falle die Axialeinkerbung 13 auf der Schmutzseite zweimal vorhanden. Diese Fig. 3 zeigt auch, daß bei geeigneter Axialabstützung 17 der Dichtring 3 mit der Wellendichtung 2 nicht unmittelbar Wand an Wand zusammengebaut sein muß.

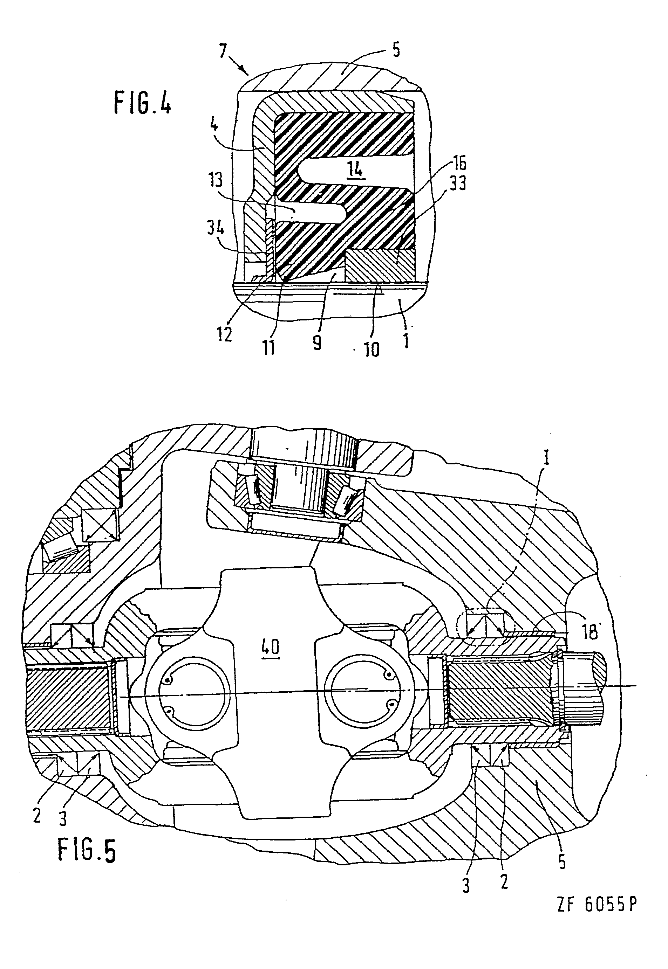

In Fig. 4 ist das Erfindungsprinzip ergänzt um einen speziellen Gleitlagerring 33 im zylindrischen Mantelbereich 10 unter dem Führungsring 16, wodurch die Reibarbeit zwischen ihm und dem drehenden Maschinenteil 1 besonders klein gehalten werden kann. Durch besondere Oberflächengestaltung der Lagerflächen vom zylindrischen Mantelbereich 10 kann dann damit wahlweise auch noch eine zusätzliche Öldichtung mittels Ölrückfördernuten oder dergleichen auf an sich bekannte Art miterreicht werden.

Eine radial auslenkbare, eventuell geschlitzte Federringscheibe 34 mit einem Ölprofil, dessen Basis gegen die Oberfläche des drehenden Maschinenteiles 1 anliegt, deckt hier stirnseitig die Axialeinkerbungen 13 gegen Schmutz ab und reduziert die Beschädigungsgefahr für die Abstreiflippe 12.

In Fig. 5 ist das drehende Maschinenteil 1 eine von einer Differentialwelle drehfest, aber axial beweglich geführte Gabelkopfhülse, die über ein Lager in einem Achsgehäuse mit einem genügend großen Radialluftspalt 9 zugeführt ist, um die durch die Schwenkgeometrie des zugehörigen Doppelkreuzgelenkes 40 verursachten exzentrischen Bewegungen während der Lenkvorgänge zuzulassen. Dabei macht die Gabelkopfhülse neben den hauptsächlichen Drehbewegungen gleichzeitige axiale und radiale Lagerveränderungen, welchen die dem Lager außen in einem Ringspalt geschützt vorgeordneten Dichtungen 2 und 3, auch unter Einwirkung starker Verschmutzung und oft extremer Witterungseinflüsse so lange wie möglich unter ausreichender Öldichtung standhalten sollen. Dies gelingt in besonderer Weise mit der erfindungsgemäßen Anordnung, weil dafür im Vergleich zu konventionellen Wellendichtungen gegen Trockenlauf weit weniger empfindliches Material verwendbar ist und sie von ihrer Bauform her sowohl für die Abstreifer- als auch für die Führungsfunktion in Radialrichtung günstigere Gestaltungsmerkmale aufweist. Dabei kann die baulich und funktionell separat vom Dichtring 3 anordenbare Wellendichtung 2 an sich bekannter Bauweise vor den Schmutzbelastungen dauerhaft geschützt werden und kann somit auch aus erheblich flexiblerem Material gefertigt sein, welches unbelastet durch Schmutz- und Verwitterungseinflüsse nun auch stärkeren Exzentrizitäten und Axialbewegungen bei langfristiger zuverlässiger Ölabdichtung erheblich besser standzuhalten vermag.

EP 0 298 995 B1

Bezugszeichen

1 drehendes Maschinenteil (Welle bzw. Rad)
2 Wellendichtung
3 Dichtring
4 Gehäusemantel (für 2 und 3)
5 stehendes Maschinenteil (Achsrohr bzw. Achse)
6 Zwischensteg
7 Stützring
8 Dichtspalt (zwischen 1 und 3)
9 Radialeinkerbung (unter 12)
10 zylindrischer Mantelbereich
11 Dichtkante (von 3)
12 Abstreiflippe (an 16)
13 Axialeinkerbung (auf Schmutzseite)
14 Axialeinkerbung (vor Wellendichtung 2)
15 Axialluftspalt
16 Führungsring (von 3)
17 Axialabstützung (von 2)
18 Gleitlager
19 Luftspalt
20 Lichtdurchmesser von 10
21 Lichtdurchmesser von 11
22 Außendurchmesser von 7
23 Außendurchmesser von 14
24 Außendurchmesser von 13
25 Gesamtbreite von 7
26 Breite von 10
27 Tiefe von 13 bzw. 14
28 Dicke von 6
29 Dicke von 12
30 Axialrücksprung von 16
31 Schrägungswinkel von 12
32 Öffnungswinkel von 13/14
33 Gleitlagerring
34 Federringscheibe
35 weichelastische Umfassung
36 Umfangsverstärkung
37 Einspannbund
38 Radialnut
39 Stützlippe
40 Doppelkreuzgelenk

**Patentansprüche**

1. Dichtring (3) zur Anordnung zwischen zueinander axial- und drehbeweglichen Maschinenteilen (1, 5) die außerdem zueinander exzentrisch verlagert sein können, mit einer Lippe (12), die auf einem der Maschinenteile (1 bzw. 5) gleitet und an einem konzentrisch zu diesem geführten Führungsring (16) angeformt ist, sowie mit einem am jeweils anderen Maschinenteil (1 bzw. 5) festgelegten Stützring (7), der mit dem Führungsring (16) über einen radial nachgiebigen Z- bzw. S-förmigen Zwischensteg (6) verbunden ist, dadurch gekennzeichnet, daß die Lippe (12) als Abstreiflippe (12) axial steif ausgeführt ist und mit ihrer Stirnfläche (12A) eine mit einem keilförmigen Querschnitt nach außen weisende Dichtkante (11) bildet, wobei die Lippe (12) zwischen der vorderen Dichtkante (11) und dem Führungsring (16) eine Radialeinkerbung (9) mit keilförmigem Querschnitt aufweist, wodurch die Lippe (12) im Einbauzustand an das zu ihr relativbewegliche Maschinenteil (1 bzw. 5) mit einem flachen Winkel (31) anliegt.

2. Dichtring (3) nach Anspruch 1, dadurch gekennzeichnet, daß vor der schmutzabgewandten Stirnseite (16A) des Führungsringes (16) ein Axialluftspalt (15) gegenüber einer Axialabstützfläche (17) vorgesehen ist, und daß die Stirnseite (16A) bei vorwiegender Radialbeanspruchung des Führungsringes (16) außer Anlage ist, bei zusätzlichem Axialschub entgegen der Abstreiflippe (12) jedoch nach einem Axialweg sich an die Axialabstützfläche (17) anlehnt.

3. Dichtring (3) nach Anspruch 1, dadurch gekennzeichnet, daß sein Elastomerwerkstoff eine Zugfestigkeit von über 25 N/mm², einen Abrieb (nach DIN 53516 gemessen) von unter 50 mm³ und eine Shore-A-Härte (nach DIN 53505 gemessen) von über 50 aufweist.

4. Dichtring (3) nach Anspruch 1, dadurch gekennzeichnet, daß der zylindrische Mantelbereich (10) eine etwa gleiche oder größere axiale Erstreckung aufweist als die ihm schmutzseitig vorgeordnete Abstreiflippe (12).

5. Dichtring (3) nach Anspruch 1, dadurch gekennzeichnet, daß für ihn und die ihm ölseitig nachgeordnete Wellendichtung (2) ein gemeinsamer Gehäusemantel (4) vorgesehen ist.

6. Dichtring (3) nach Anspruch 1, dadurch gekennzeichnet, daß oberhalb seiner Abstreiflippe (12) von beiden Stirnflächen (12A und 16A) ausgehende und bis über die Mitte reichende, zueinander höhenversetzte V-förmige Axialeinkerbungen (13, 14) mit abgerundetem Nutengrund vorgesehen sind, wobei die schmutzseitige Axialeinkerbung (13) durch den Gehäusemantel (4) radial überdeckt ist.

7. Dichtring (3) nach Anspruch 1, dadurch gekennzeichnet, daß er mit einer ölseitig nachgeordneten Wellendichtung (2) einstückig ausgeführt ist und beide einen gemeinsamen Führungsring (16) aufweisen.

8. Dichtring (3) nach Anspruch 1, dadurch gekennzeichnet, daß radial zwischen zylindrischem Fußbereich (10) und drehendem Maschinenteil (1) ein Gleitlager (18) vorgesehen ist.

9. Dichtring (3) nach Anspruch 1, dadurch gekennzeichnet, daß er selbst relativ zu dem ihn umgebenden stehenden Maschinenteil (5) drehfest gehalten ist.

10. Dichtring (3) nach Anspruch 1, dadurch gekennzeichnet, daß er am drehenden Maschinenteil (1) mitnehmbar angeordnet ist.

11. Dichtring (3) nach Anspruch 1, dadurch gekennzeichnet, daß zwischen der schmutzseitigen Stirnwand des Gehäusemantels (4) und der dieser zugewandten Stirnseite des Dichtringes (3) ein radial gegen das drehende Maschinenteil (1) angefederter Dünnblechring (34) vor der Abstreiflippe (12) vorgesehen ist.

7

12. Dichtring (3) nach Anspruch 1, dadurch gekennzeichnet, daß er und eine Wellendichtung (2) zwischen einem Doppelkreuzgelenk (40) und einem Achsgehäuse für eine Differentialwelle zum Antrieb einer Lenkachse angeordnet sind.

**Revendications**

1. Joint annulaire (3) d'étanchéité entre deux pièces mécaniques (1, 5) mobiles mutuellement en direction axiale et en rotation,

qui peuvent en outre être décalées excentriquement l'une par rapport à l'autre,

le joint comportant une lèvre (12) qui glisse sur l'une (1 ou 5) des pièces mécaniques et qui est ménagée sur un anneau de guidage (16) maintenu concentrique par rapport à cette pièce,

et comportant en outre un anneau d'appui (7), fixé à l'autre pièce mécanique (5 ou I) et raccordé à l'anneau de guidage (16) par une paroi intermédiaire (6) flexible radialement, ayant une forme en Z ou en S,
caractérisé:

en ce que la lèvre (12) est formée par une lèvre racleuse (12) rigide en direction axiale et comporte une surface frontale (12A) qui définit un bord de joint (11) dirigé vers l'extérieur et ayant une section cunéiforme,

la lèvre (12) comportant une entaille radiale (9) à section cunéiforme entre ledit bord de joint (11) et l'anneau de guidage (16),

de sorte que la lèvre (12), dans l'état de montage, s'appuie avec un faible angle d'inclinaison (31) contre la pièce mécanique (1 ou 5) mobile par rapport à elle.

2. Joint (3) selon la revendication 1, caractérisé en ce qu'un jeu axial (15) est prévu entre la face frontale (16A) de l'anneau de guidage (16), du côté opposé de la saleté, et une surface d'appui axial (17),

et en ce que ladite face frontale (16A) n'est pas appuyée en cas de sollicitation à prédominance radiale de l'anneau de guidage (16), mais s'appuie quand même contre ladite surface d'appui axial (17) après avoir effectué une course axiale en cas de poussée axiale supplémentaire dans le sens opposé à la lèvre racleuse (12).

3. Joint (3) selon la revendication 1, caractérisé en ce qu'il est en matière élastomère ayant une résistance à la traction supérieure à 25 N/mm², une usure par frottement (mesurée selon DIN 53516) inférieure à 50 mm³, et une dureté Shore-A (mesurée selon DIN 53505) supérieure à 50.

4. Joint (3) selon la revendication 1, caractérisé en ce que sa zone périphérique cylindrique (10) a une longueur axiale sensiblement égale ou supérieure à celle de la lèvre racleuse (12) située devant elle du côté de la saleté.

5. Joint (3) selon la revendication 1, caractérisé en ce qu'une cage commune (4) est prévue pour lui et pour le joint d'étanchéité d'arbre (2) qui lui est associé du côté de l'huile.

6. Joint (3) selon la revendication 1, caractérisé:
en ce qu'il comporte, en dessus de sa lèvre racleuse (12) des entailles axiales (13, 14) en forme de V à fond arrondi, qui sont mutuellement décalées en hauteur et qui s'étendent à partir des deux faces frontales (12A et 16A) au-delà du milieu du joint,

l'entaille axiale (13) située du côté de la saleté étant couverte radialement par la cage (4).

7. Joint (3) selon la revendication 1, caractérisé en ce qu'il est réalisé en une seule pièce avec un joint d'étanchéité d'arbre (2) qui lui est associé du côté de l'huile, les deux joints ayant un anneau de guidage commun (16).

8. Joint (3) selon la revendication 1, caractérisé en ce qu'un palier à glissement (18) est prévu radialement entre une zone cylindrique de pied (10) et la pièce mécanique tournante (1).

9. Joint (3) selon la revendication 1, caractérisé en ce qu'il est maintenu fixe en rotation par rapport à la pièce mécanique stationnaire (5) qui l'entoure.

10. Joint (3) selon la revendication 1, caractérisé en ce qu'il est monté sur la pièce mécanique tournante (1) de manière à être entraîné par elle.

11. Joint (3) selon la revendication 1, caractérisé en ce qu'une bague en tôle mince (34) appuyée élastiquement en direction radiale contre la pièce mécanique tournante (1) est prévue devant la lèvre racleuse (12) entre la paroi frontale de la cage (4) du côté de la saleté et la face frontale corespondante du joint d'étanchéité (3).

12. Joint (3) selon la revendication 1, caractérisé en ce que lui et un joint d'étanchéité d'arbre (2) sont disposés entre un joint à double cardan (40) et un carter d'essieu pour un arbre de différentiel d'entraînement d'un essieu directeur.

**Claims**

1. Sealing ring (3) to be arranged between mutually axially moveable and rotating machine parts (1, 5)

which can in addition be moved eccentrically with respect to one another,

with a scraper lip (12) which slides on one of the machine parts (1 or 5), integrally formed with a guide ring (16) which is concentrically guided by it,

and with a support ring (7) fitted to the other machine part (1 or 5) which is connected to the guide ring (16) by a radially cushioned Z or S-shaped intermediate wall (6),
characterized in that,

the scraper lip (12) is arranged as an axially rigid scraper lip (12) whose face end (12A) forms a sealing edge (11) which has a wedge-shaped cross-section facing outwards,

whereby the lip (12) between the front sealing edge (11) and the guide ring (16) has a radial notch (9) with wedge-shaped cross-section,

which causes the lip (12) in installed condition to be arranged on the machine part (1 or 5) which moves relative to it at a shallow angle (31).

2. Sealing ring (3) as claimed in claim 1, characterized in that

an axial air gap (15) is arranged against an axial support (17) on the face side (16A) of guide ring (16) which faces away from dirt source,

and that the face end (16A) emerges from the unit in response to rising radial pressure of the guide ring (16) that still comes to rest against the axial support (17) after axial travel in response to additional axial thrust against the scraper lip (12).

3. Sealing ring (3) as claimed in claim 1, characterized in that its elastomer material has a tensile strength in excess of 25 N/mm², wear characteristics (measured in accordance with DIN 53516) of less than 50 mm³ and a hardness (measured in accordance with DIN 53505) in excess of 50.

4. Sealing ring (3) as claimed in claim 1, characterized in that the cylindrical jacket region (10) has approximately the same or a larger axial elasticity than the scraper lip (12) arranged between it and the source of dirt.

5. Sealing ring (3) as claimed in claim 1, characterized in that the housing jacket (4) is provided for both it and the shaft seal (2) arranged inside it in the oil cavity.

6. Sealing ring (3) as claimed in claim 1, characterized in that

V-shaped axial notches (13 and 14) at offset height radiate out from both face ends (12A and 16A) and extend over the centre of its scraper lip (12) which have a rounded base in their respective grooves,

whereby the axial notch (13) on the dirt side is radially covered by the housing jacket (4).

7. Sealing ring (3) as claimed in claim 1, characterized in that it is arranged with a single shaft seal (2) located inside on the oil side whereby both share a common guide ring (16).

8. Sealing ring (3) as claimed in claim 1, characterized in that an anti-friction bearing (18) is arranged radially between the cylindrical jacket region (10) and the rotating machine part (1).

9. Sealing ring (3) as claimed in claim 1, characterized in that it is held in a position where it does not rotate relative to the stationary machine part (5) which encompasses it.

10. Sealing ring (3) as claimed in claim 1, characterized in that it is arranged in a manner which enables it to be driven by the rotating machine part (1).

11. Sealing ring (3) as claimed in claim 1, characterized in that a spring ring disc (34) is arranged between the wall on the dirt-opposed side of the housing jacket (4) and the opposing face of the sealing ring (3) which is radially springloaded against the rotating machine part (1) and arranged in front of the scraper lip (12).

12. Sealing ring (3) as claimed in claim 1, characterized in that both it and a shaft seal (2) are arranged between a double universal joint (40) and an axle housing for a differential shaft which drives a steered axle.

FIG.1

FIG.2

FIG.3

ZF 6055 P

FIG.4

FIG.5

ZF 6055 P

2